Europäisches Patentamt

European Patent Office

Office européen des brevets

(19)

(11) Veröffentlichungsnummer : **0 120 271
B1**

(12) # EUROPÄISCHE PATENTSCHRIFT

(45) Veröffentlichungstag der Patentschrift :
16.04.86

(21) Anmeldenummer : 84101635.5

(22) Anmeldetag : 17.02.84

(51) Int. Cl.⁴ : **B 01 D 53/04, C 01 B 21/04,
A 23 L   3/34, B 65 D 81/20**

(54) Verfahren und Vorrichtung zum Inertisieren von Transport-Containern.

(30) Priorität : 19.03.83 DE 3310012

(43) Veröffentlichungstag der Anmeldung :
03.10.84 Patentblatt 84/40

(45) Bekanntmachung des Hinweises auf die Patenterteilung : 16.04.86 Patentblatt 86/16

(84) Benannte Vertragsstaaten :
DE FR GB IT NL

(56) Entgegenhaltungen :
EP-A- 0 055 962
FR-A-   727 566

(73) Patentinhaber : Bergwerksverband GmbH
Franz-Fischer-Weg 61
D-4300 Essen 13 (DE)

Nitrotec Corporation
500 Fifth Avenue
New York New York 10110 (US)

(72) Erfinder : Knoblauch, Karl, Dr.
Semperstrasse 55
D-4300 Essen 1 (DE)
Erfinder : Heimbach, Heinrich
Zahnrad 38
D-4300 Essen-Heidhausen (DE)
Erfinder : Harder, Burkhard, Dr.
Barchembach 12
D-4200 Oberhause-Dellwig (DE)
Erfinder : Cosentino, Charles F.
Nitrotec Corporation 500 Fifth Avenue
New York, N.Y. 10110 (US)

(74) Vertreter : Schumacher, Horst, Dr. Dipl.-Phys.
Frühlingstrasse 43 (Ecke Holunderweg)
D-4300 Essen 1 (DE)

## Beschreibung

Die Erfindung betrifft ein Verfahren zum Inertisieren von Transport-Containern mit einem Gas, das Stickstoff und eine vorbestimmte Konzentration von bis zu etwa 5 Vol.-% Sauerstoff enthält sowie eine Vorrichtung zum Durchführen dieses Verfahrens.

Transport-Container werden inertisiert, um das darin gelagerte Gut vor schädlichen Einflüssen des Luftsauerstoffes zu schützen. In vielen Fällen ist es dabei aber erforderlich, eine ganz bestimmte Restkonzentration von Sauerstoff im Behälter aufrechtzuerhalten und diesen Konzentrationswert während längerer Zeiten konstant zu halten. Vor allem beim Transport leicht verderblicher Lebensmittel, Pflanzen und Blumen in großen Transport-Containern für den LKW-, Eisenbahn- und Schiffstransport sowie gegebenenfalls auch für den Flugzeugtransport hat sich die seit langem übliche Kühlung der Lebensmittel während des Transportes sowie eine Kontrolle der Luftzirkulation und der relativen Luftfeuchtigkeit vor allem bei hochwertigen Lebensmitteln als unzureichend erwiesen. Da es aber bereits seit langem bekannt war, daß sich bei leicht verderblichen Lebensmitteln die Atmungsaktivität der Lebensmittel, Pflanzen und Blumen und das Bakterienwachstum in einer Atmosphäre mit verringertem Sauerstoffgehalt verringert, hat man bereits versucht, die Container für die Zeit des Transportes mit Stickstoff zu inertisieren. Dabei war das Problem zu lösen, daß « lebende » Produkte eine bestimmte Mindestsauerstoffkonzentration in der sie umgebenden Atmosphäre von in der Regel weniger als 5 meistens aber mehr als 0,1 Vol.% benötigen, um sich nicht chemisch zu verändern. Außerdem ist die Anwesenheit signifikanzer Kohlendioxidkonzentrationen unbedingt zu vermeiden. Abweichungen der optimalen Sauerstoffkonzentration führen entweder zur Zersetzung der Lebensmittel oder Verwelkung der Blumen und Pflanzen oder vermindern ihre Haltbarmachung während des Transportes.

Zur Lösung dieses Problems ist vorgeschlagen worden, den zu inertiesierenden Transport-Container mit einem reinen Stickstoff enthaltenden Flüssiggastank zu verbinden und zum Zwecke des Inertisierens den Stickstoff aus dem Tank und eine kontrollierte Menge Sauerstoff aus der Atmosphäre in den Transport-Container einzuleiten oder aber, zur Verringerung des Regelaufwandes, in dem Tank ein die notwendige Sauerstoffmenge bereits enthaltendes Gemisch aus Sauerstoff und Stickstoff zu speichern (US-Patentschrif 3 962 477). Diese Art der Transport-Containerinertisierung hat aber wesentliche Nachteile :

erstens muß der Flüssiggastank gekühlt werden und deshalb aus einem Dewar-Gefäß bestehen ; zur Kühlung wird ständig Flüssiggas verdampft werden, so daß die Flüssiggasverluste bis zu 80 % betragen ;

zweitens erfordert die Verwendung von Flüssiggastanks für Transport-Container ein verzweigtes Netz von Nachfüllstationen, da die Speicherkapazität solcher Tanks sehr beschränkt ist und

drittens ist die Bereitstellung eines stickstoffreichen Gasgemisches mit einer vorbestimmten Sauerstoffkonzentration aufgrund von Entmischungsvorgängen im Flüssiggastank bzw. der Regelmaßnahmen beim Zudosieren von Luftsauerstoff zu reinem Stickstoff überaus aufwendig.

Der Erfindung liegt daher die Aufgabe zugrunde, ein Verfahren und eine Vorrichtung der eingangs genannten Art bereitzustellen, mit welchem auf einfache und kostengünstige Weise eine Transport-Containerinertisierung mit einem Stickstoff und einer vorbestimmten Konzentration an Sauerstoff enthaltenden Gas möglich ist.

Die Aufgabe wird hinsichtlich eines Verfahrens dadurch gelöst, daß in einem zyklischen Druckwechseladsorptionsprozeß Luft jeweils während der Adsorptionsschritte bei einem Druck oberhalb des atmosphärischen Luftdruckes durch eine Adsorptionsmittelschicht, in der der Luftsauerstoff an dem Adsorptionsmittel adsorbiert, geführt und ein am Ende der Adsorptionsmittelschicht abströmendes, stickstoffreiches, noch Sauerstoff enthaltendes Gasgemisch in den zu inertisierenden Transport-Container geleitet und jeweils während der Desorptionsschritte der adsorbierte Luftsauerstoff durch Druckabsenken von dem Adsorptionsmittel desorbiert und schließlich der nächste Adsorptionsschritt gestartet wird, wobei in einer ersten Inertisierungsphase ein Vielfaches der zum Einhalten der gewünschten Sauerstoffkonzentration erforderlichen vorbestimmten Luftmenge und in einer zweiten Inertisierungsphase das Einfache dieser Luftmenge die Adsorptionsmittelschicht durchströmt. Die Erfindung beruht also auf dem Grundgedanken bei der an sich bekannten Transport-Containerinertisierung mit einem Gas, das Stickstoff und eine vorbestimmte Konzentration von Sauerstoff enthält, den Stickstoff jeweils bei Bedarf und unabhängig von Flüssiggastanks und Auffüllstationen für solche Tanks mit Hilfe eines an sich bekannten zyklischen Druckwechseladsorptionsprozesses, wie er u. a. in der Zeitschrift Fuel, 1981, S. 817-822 beschrieben worden ist, bereitzustellen. Hierdurch wird eine Unabhängigkeit von der Versorgung mit Stickstoff erreicht und Energieverluste aufgrund von Flüssigstickstoff-Verdampfung vermieden. Erfindungsgemäß wird die im Inertisierungsstickstoff notwendige Sauerstoffkonzentration auf sehr elegante und leicht reproduzierbare Weise gewährleistet, indem die während eines Adsorptionsschrittes durch die Adsorptionsmittelschicht geführte Luftmenge entsprechend der Sauerstoffkonzentration im Produktgas eingestellt wird. Dies kann sowohl durch Verändern der Dauer des Adsorptionsschrittes bei konstanter Strömungsgeschwindigkeit der Luft als auch durch Konstanthalten der Dauer des Adsorptionsschrittes und Veränderung der Luftströmungsgeschwindigkeit durch die Adsorptionsmittelschicht erfolgen. Man bedient sich erfindungsgemäß also einer bisher als schädlich angesehenen Eigenart von üblichen Druckwechseladsorptionsprozessen, die darin besteht, daß ein reines Produktgas nur dann erhalten wird, wenn durch geeignete Strömungs- und Druckbedingungen sichergestellt wird, daß alle anderen Gase aus dem Produktgas an dem Adsorptionsmittel adsorptiv aus dem Ausgangsgemisch entfernt werden. Demgegenüber geht die Erfindung einen völlig anderen Weg, indem sie vorschlägt, den Druckwechseladsorptionsprozeß gezielt so zu betreiben, daß sich im Produktgas eine vorbestimmte Menge der ansonsten aus dem Ausgangsgasgemisch zu entfernenden Gaskomponente befindet. Natürlich ist es nicht erforderlich, die Sauerstoffkonzentration im Produktgas während der einzelnen Adsorptionsschritte konstant zu halten, vielmehr wird es in der Regel ausreichen, die während der Adsorptionsphase die Adsorptionsmittelschicht durchströmende Luftmenge so einzustellen, daß die mittlere Konzentration des während eines Adsorptionsschrittes abströmenden Produktgases einen konstanten Mittelwert aufweist. Dies ist deshalb möglich, weil die Adsorptionsschritte immer nur relativ kurz sind, so daß ein schneller Konzentrationsausgleich stattfinden kann.

Das Inertisieren eines Transport-Containers erfolgt bevorzugt durch Verdrängung der ursprünglich in dem Transport-Containervorhandenen Gasatmosphäre durch Leckstellen oder besondere Ventilationsöffnungen des Transport-Containers. Besonders beim Transport von leicht verderblichen Lebensmitteln wie z. B. Feldfrüchten, die sehr schnell nach der Ernte einen Feuchtigkeitsverlust erleiden, ist ein besonders schnelles Inertiesieren des Transport-Containers erforderlich ; dieses ist dadurch gewährleistet, daß erfindungsgemäß die Inertisierung in zwei Phasen abläuft, wobei während der ersten Inertisierungsphase ein Vielfaches der zum Einhalten der gewünschten Sauerstoffkonzentration erforderlichen Luftmenge die Adsorptionsmittelschicht in den jeweiligen Adsorptionsschritten durchströmt. Hierzu wird bei konstanter Dauer des Adsorptionsschrittes eine bevorzugt etwa zweimal so große Luftmenge durch die Adsorptionsmittelschicht geleitet, wie während der zweiten Inertisierungsphase, in welcher das Inertisierungsgas auf die letztlich erforderliche Sauerstoffkonzentration eingestellt ist. Der erhöhte Luftdurchsatz durch die Adsorptionsmittelschicht während der ersten Inertisierungsphase führt zu einer höheren Sauerstoffkonzentration im Inertisierungsgas, so daß also der Transport-Container zunächst mit sehr großen Gasmengen pro Zeiteinheit bis auf eine Sauerstoffkonzentration inertisiert wird, die zwischen der Sauerstoffkonzentration der atmosphärischen Umgebungsluft und der gewünschten Endkonzentration liegt. Spätestens wenn diese Sauerstoffkonzentration erreicht ist, wird die Druckwechseladsorptionsanlage auf den geringeren Luftdurchsatz umgestellt, so daß nach der anfänglichen Schnellinertisierung nunmehr entsprechend langsamer der Endwert der Sauerstoffkonzentration erreicht wird. Die Inertisierung wird also beschleunigt, ohne daß hierzu eine größere Druckwechseladsorptionsanlage erforderlich ist. Natürlich kann die Inertisierung auch in noch mehreren Phasen oder sogar stufenlos erfolgen.

Die Unabhängigkeit des erfindungsgemäßen Verfahrens von der Versorgung mit Stickstoff in Flüssigkeitstanks macht sich vor allem beim Inertisieren von mit leicht verderblichen Lebensmitteln, Pflanzen und Blumen beladenen Transport-Containern bemerkbar, da man bei diesem Verfahren lediglich an eine Energiequelle für einen Luftkompressor bereitstellen muß.

Die Sauerstoffkonzentration in dem Transport-Container ist in besonderem Maße dazu geeignet, den Druckwechseladsorptionsprozeß hinsichtlich des Einhaltens der gewünschten Sauerstoffkonzentration über die Luftdurchströmungsmenge zu regeln.

Weiterbildungen und vorteilhafte Ausgestaltungen der Erfindung hinsichtlich des Verfahrens sind in den abhängigen Ansprüchen (2 bis 7) enthalten.

Die Erfindung wird hinsichtlich einer Vorrichtung zum Durchführen des hiervor beschriebenen Verfahrens durch einen auf einen Restsauerstoffgehalt von bis zu 5 Vol.- % zu inertisierenden Transport-Container, eine zyklisch arbeitende Druckwechseladsorptionsanlage mit mindestens einem mit einem Adsorptionsmittel für Sauerstoff gefüllten Adsorber, eine den Transport-Container mit dem Adsorber für stickstoffreiches, eine vorbestimmte Sauerstoffkonzentration enthaltendes Gasgemisch verbindbare Leitung sowie eine die während der Adsorptionsschritte den Adsorber durchströmende Luftmenge entsprechend der in nacheinander ablaufenden Inertisierungsphasen gewünschten Sauerstoffkonzentration regelnde Steuereinheit gelöst. Eine solche Vorrichtung empfiehlt sich vor allem in Kombination mit Transportfahrzeugen für die zu inertisierenden Transport-Container wie Schiffen, Lastkraftwagen und Eisenbahnen, bei denen das Transportfahrzeug mit der Druckwechseladsorptionsanlage und einem Verteilersystem ausgerüstet ist, über welches die von dem Fahrzeug geladenen Transport-Container mit der Druckwechseladsorptionsanlage verbindbar sind.

Beim Transport von vor allem leicht verderblichen Lebensmitteln, Pflanzen und Blumen in Transport-Containern die für längere Zeit nicht an eine zentrale Druckwechseladsorptionsanlage eines Fahrzeugs oder eines Lagerplatzes angeschlossen werden können, empfiehlt es sich, jeden Container mit einer eigenen Druckwechseladsorptionsanlage auszurüsten und diese in einer nach innen gerichteten Vertiefung einer Containerwand anzuordnen. Auf diese Weise bleibt der Containertransport durch die Druckwechseladsorptionsanlage unbehindert und insbesondere ergibt sich eine einfache Kombinationsmöglichkeit mit einer am Container eventuell bereits vorhandenen Kühlanlage für den Containerinhalt.

Die Erfindung wird nachfolgend anhand eines in der Zeichnung näher dargestellten Ausführungsbeispiels des näheren erläutert. In der Zeichnung zeigen :

Figur 1 eine schematische Darstellung eines Transportfahrzeuges mit einem Container mit einer Druckwechseladsorptionsanlage für die Container-Inertisierung sowie

Figur 2 eine schematische Darstellung mehrerer Container und einer Druckwechseladsorptionsanlage.

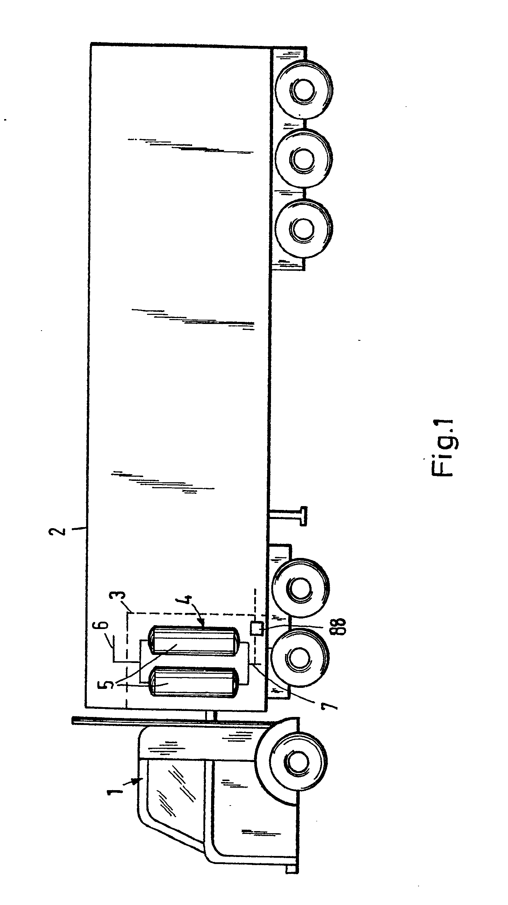

In der Fig. 1 ist ein Zugfahrzeug 1 für den Transport von Containern 2 dargestellt. Der Container ist mit einer nach innen gerichteten Vertiefung 3 einer Containerwand ausgestattet. In dieser Vertiefung ist eine autarke Druckwechseladsorptionsanlage 4 bestehend aus einem Dieseltank, einem Dieselkompressor — beide nicht eigens dargestellt, da an sich bekannt — zwei Adsorbergefäßen 5 verbunden mit den notwendigen, an sich bekannten Rohrleitungen und Ventilen sowie eine die Adsorbergefäße und das Innere des Transport-Containers verbindende Leitung 6 sowie eine Luftansaugleitung 7.

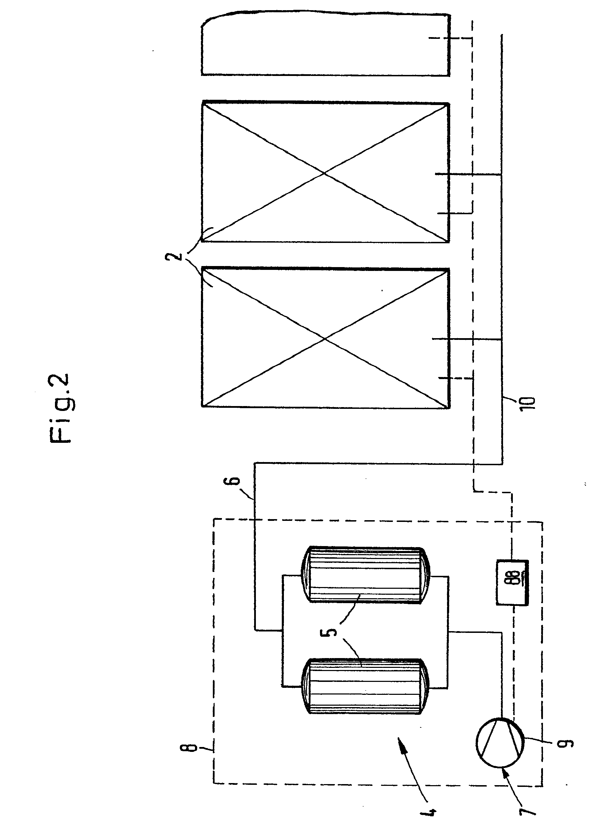

Gemäß Fig. 2 können auch mehrere Transport-Container 2 mit einer einzigen Druckwechseladsorptionsanlage 4 verbunden sein. Auf einem Rahmen 8 ist eine autarke Druckwechseladsorptionsanlage 4 bestehend aus einem Kompressor 9, den beiden Adsorbergefäßen 5, mit den sie verbindenden Gasleitungen und nicht einzeln dargestellten da üblichen Ventilen und einer sich verzweigenden Gasleitung 10, durch die das produzierte Inertgas mit der gewünschten Sauerstoffkonzentration in die Transport-Container 2 strömt, fest montiert.

Die Druckwechseladsorptionsanlagen 4 entsprechen vorzugsweise den aus der erwähnten Zeitschrift Fuel bekannten. Eine Steuereinheit 88 ist nur sehr schematisch dargestellt, wobei die gestrichelten Verbindungslinien zur Druckwechseladsorptionsanlage 4 einerseits sowie zu den Transport-Containern 2 andererseits andeuten, daß diese Einheiten regelungstechnisch verbunden sind. In den Transport-Containern 2 wird die Sauerstoffkonzentration gemessen und die Ventile und Luftdurchströmungsmenge der Druckwechseladsorptionsanlage werden von der Einheit 88 gesteuert.

Ein Transport-Container, bestückt mit an Luft leicht verderblichen Gütern, hat die Maße von 12 m Länge, 3 m Höhe und 2,5 m Breite einen Rauminhalt von ca. 65 m³ Nutzvolumen und ein Gewicht von 30 t. Auf der Rückseite (Schmalseite) des Containers befinden sich die Türen zum Be- und Entladen, auf der Vorderseite eine in Containerlängsrichtung ausgerichtete Einsparung von 1,80 m Höhe, 1 m Tiefe und 2,5 m Breite. In diesem Raum, der nach außen offen ist und von oben und zu einer Seite von der Containerwand gebildet wird, ist eine autarke Druckwechseladsorptionsanlage eingebaut. Die Druckwechselanlage entspricht der in der Zeitschrift Fuel erwähnten und besteht aus 2 Transport-Containern je 100 l Inhalt, ist mit einem an sich bekannten Kohlenstoffmolekularsieb gefüllt, daß die Eigenschaft hat, selektiv den Sauerstoff aus der Luft zu adsorbieren. Die Druckwechseladsorptionsanlage ist mit acht Ventilen und verbindenden Rohrleitungen bestückt. Sie wird betrieben in einem Druckbereich von 8 bar bis 1 bar. Die Zykluszeiten betragen 120 s. In einem ersten Halbzyklus erfolgt während 1,5 s Druckausgleich, während 3,5 s Druckaufbau und während 55 s Produktion von Stickstoff mit einer über die Luftmenge pro Zeit einstellbaren Sauerstoffkonzentration. Im zweiten Halbzyklus erfolgt während 1,5 s wieder der Druckausgleich zwischen beiden Adsorbern und während 58,5 s Desorption auf etwa 1 bar.

Die Luft wird mit einer Rate von maximal 40 m³/h auf 8 bar durch einen luftgekühlten Dieselkompressor komprimiert. Der Dieselkompressor hat einen Verbrauch von ca. 1,5 l Diesel pro Stunde. Die Dieselvorratsmenge beträgt 100 l. Über eine elektronische Steuereinheit, die die notwendige Energie ebenfalls vom Dieselaggregat bezieht, wird die Containeratmosphäre in bezug auf den Sauerstoffgehalt kontinuierlich überwacht. Erhöht sich die Sauerstoffkonzentration im Container, z. B. bedingt durch das Öffnen der Containertür auf über 5 Vol.- %, so regelt die Elektronik die Anlage zur Produktion von 25 m³ Inertgas pro Stunde ein, was einer Sauerstoffkonzentration von 4,5 % entspricht (erste Inertisierungsphase). Ist die Sauerstoffkonzentration auf unter 5 % gesunken, reduziert die Steuerung die Luft- und Produktgasmenge und die Anlage produziert nunmehr 8 m³ Inertgas pro Stunde, was einem Sauertsoffgehalt von 0,5 % entspricht (zweite Inertisierungsphase). In einem anderen Fall ist die Steuerung so programmiert, daß die Anlage 4 m³ Inertgas pro Stunde mit 0,1 % Sauerstoff in der zweiten Inertisierungsphase erzeugt. Dabei hängt die in der zweiten Inertisierungsphase einzustellende Sauerstoffkonzentration von dem zu inertisierenden Gut ab und ergibt sich unter anderem aus der erwähnten US-Patentschrift 3 962 477.

Das Inertgas strömt jeweils über eine den Container und die Druckwechselanlage verbindenden Leitung in die Containervorderseite ein, durchströmt diesen und verläßt den Container durch sich in den Türen befindene Lüftungsschlitze oder durch Leckstellen im Container.

**Patentansprüche**

1. Verfahren zum Inertisieren von Transport-Containern mit einem Gas, das Stickstoff und eine vorbestimmte Konzentration von bis zu etwa 5 Vol.- % Sauerstoff enthält, dadurch gekennzeichnet, daß in einem zyklischen Druckwechseladsorptionsprozeß Luft jeweils während der Adsorptionsschritte bei einem Druck oberhalb des atmosphärischen Luftdruckes durch eine Adsorptionsmittelschicht, in der der Luftsauerstoff an dem Adsorptionsmittel adsorbiert, geführt und ein am Ende der Adsorptionsmittelschicht abströmendes, stickstoffreiches, noch Sauerstoff enthaltendes Gasgemisch in den zu inertisierenden Transport-Container geleitet und jeweils während der Desorptionsschritte der adsorbierte Luftsauerstoff durch Druckabsenken von dem Adsorptionsmittel desorbiert und schließlich der nächste Adsorptionsschritt gestartet wird, wobei in einer ersten Inertisierungsphase ein Vielfaches der zum Einhalten der gewünschten Sauerstoffkonzentration erforderlichen vorbestimmten Luftmenge und in einer zweiten Inertisierungsphase das Einfache dieser Luftmenge die Adsorptionsmittelschicht durchströmt.

2. Verfahren nach Anspruch 1, dadurch gekennzeichnet, daß ein Transport-Container mit an Luft leicht verderblichen Gütern, wie z. B. Blumen, Pflanzen und Lebensmittel inertisiert wird.

3. Verfahren nach Anspruch 1 oder 2, dadurch gekennzeichnet, daß das Inertisierungsgas auf etwa atmosphärischen Luftdruck entspannt in den Transport-Container geleitet wird.

4. Verfahren nach einem oder mehreren der Ansprüche 1 bis 3, dadurch gekennzeichnet, daß der Wechsel von der ersten zu der zweiten Inertisierungsphase spätestens dann erfolgt, wenn die Sauerstoffkonzentration in dem Transport-Container die Sauerstoffkonzentration des bei der ersten Inertisierungsphase aus der Adsorptionsmittelschicht abströmenden Gasgemisches erreicht hat.

5. Verfahren nach einem oder mehreren der Ansprüche 1 bis 4, dadurch gekennzeichnet, daß die Adsorptionsmittelschicht während der Adsorptionsschritte bis zum Beginn der zweiten Inertisierungsphase etwa mit der doppelten Luftmenge pro Zeiteinheit durchströmt wird, wie während der zweiten Inertisierungsphase und die Dauer der Adsorptionsschritte immer gleich bleibt.

6. Verfahren nach einem oder mehreren der Ansprüche 1 bis 5, dadurch gekennzeichnet, daß nach dem Erreichen der gewünschten Sauerstoffkonzentration in dem Transport-Container eine zusätzliche Durchspülung des Transport-Containers mit dem in dem Druckwechseladsorptionsprozeß gewonnenen, stickstoffreichen Gasgemisch mit der gewünschten Sauerstoffkonzentration durchgeführt wird.

7. Verfahren nach einem oder mehreren der Ansprüche 1 bis 6, dadurch gekennzeichnet, daß die Sauerstoffkonzentration in dem Transport-Container gemessen und zum Regeln der während jeweils eines Adsorptionsschrittes die Adsorptionsmittelschicht durchströmenden Luftmenge verwendet wird.

8. Vorrichtung zum Durchführen des Verfahrens nach den Ansprüchen 1 bis 7, gekennzeichnet durch einen auf einen Restsauerstoffgehalt von bis zu 5 Vol.-% zu inertisierenden Transport-Container, eine zyklisch arbeitende Druckwechseladsorptionsanlage (4) mit mindestens einem mit einem Adsorptionsmittel für Sauerstoff gefüllten Adsorber (5), eine den Transport-Container mit dem Adsorber für stickstoffreiches, eine vorbestimmte Sauerstoffkonzentration enthaltendes Gasgemisch verbindbare Leitung (6) sowie eine die während der Adsorptionsschritte den Adsorber durchströmende Luftmenge entsprechend der in nacheinander ablaufenden Inertisierungsphasen gewünschten Sauerstoffkonzentration regelnde Steuereinheit (88).

9. Vorrichtung nach Anspruch 8, gekennzeichnet durch einen Transport-Container für an Luft leicht verderbliche Güter, wie Lebensmittel, Pflanzen und Blumen mit einer in einer nach innen gerichteten Vertiefung (3) einer Containerwand angeordneten, einerseits mit der Atmosphäre außerhalb und andererseits mit der Atmosphäre innerhalb des Containers verbundenen, mit zwei Adsorptionsmittelschichten gefüllten Druckwechseladsorptionsanlage (4), einem Kompressor (9) für Luft und einer Steuer- und Analyseneinheit (88) für die Ein- und Auslaßventile der Adsorbergefäße.

## Claims

1. A method of making transport containers inert with a gas which contains nitrogen and a predetermined concentration of up to about 5 vol. % of oxygen, characterized in that, in a cyclic pressure-change adsorption process, during the adsorption stages air is passed in each case at a pressure above the atmospheric air pressure through an adsorption agent layer in which the oxygen in the air is adsorbed on the adsorption agent, and a gas mixture which flows off at the end of the adsorption agent layer and which is rich in nitrogen and still contains oxygen is fed into the transport container to be made inert, and during the desorption stages in each case the adsorbed oxygen in the air is desorbed from the adsorption agent by lowering the pressure and finally the next adsorption stage is initiated, a multiple of the predetermined quantity of air required for maintaining the desired oxygen concentration flowing through the adsorption agent layer in a first inertizing phase and the unmultiplied value of the said quantity of air flowing through the adsorption agent layer in a second inertizing phase.

2. A method according to claim 1, characterized in that a transport container with articles perishable in air, such as flowers, plants, and foodstuffs for example, is made inert.

3. A method according to claim 1 or 2, characterized in that the inertizing gas is fed depressurized to approximately atmospheric air pressure into the transport container.

4. A method according to one or more of Claims 1 to 3, characterized in that the change from the first to the second inertizing phase takes place at the latest when the oxygen concentration in the transport container has reached the oxygen concentration of the gas mixture flowing away out of the adsorption agent layer in the first inertizing phase.

5. A method according to one or more of claims 1 to 4, characterized in that during the adsorption stages approximately twice the quantity of air per unit of time as during second inertizing phase flows through the adsorption agent layer until the beginning of the second inertizing phase, and the duration of the adsorption stages always remains the same.

6. A method according to one or more of claims 1 to 5, characterized in that, after the desired oxygen concentration has been reached in the transport container an additional rinsing of the transport container is carried out with the nitrogen-rich gas mixture recovered in the pressure-change adsorption process and having the desired oxygen concentration.

7. A method according to one or more of claims 1 to 6, characterized in that the oxygen concentration in the transport container is measured and is used for regulating the quantity of air flowing through the adsorption agent layer during one adsorption stage in each case.

8. Apparatus for performing the method according to Claims 1 to 7, characterized by a transport container to be made inert to a residual oxygen content of up to 5 vol. %, a cyclically operating pressure-change adsorption installation (4) with at least one adsorber (5) filled with an adsorption agent for oxygen, a line (6) which can connect the transport container to the adsorber for a nitrogen-rich gas mixture containing a predetermined oxygen concentration, and a control unit (88) regulating the quantity of air flowing through the absorber during the adsorption stages in accordance with the oxygen concentration desired in inertizing phases taking place in succession.

9. Apparatus according to claim 8, characterized by a transport container for articles perishable in air, such as foodstuffs, plants, and flowers, with a pressure-change adsorption installation (4) which is disposed in an inwardly orientated cavity (3) in a wall of the container, is connected to the atmosphere outside the container on the one hand and to the atmosphere inside the container on the other hand, and is filled with two adsorption agent layers, a compressor (9) for air, and a control and analysis unit (88) for inlet and outlet valves of the adsorber vessels.

## Revendications

1. Procédé pour la réalisation d'une atmosphère inerte dans des conteneurs de transport au moyen d'un gaz contenant de l'azote et une quantité déterminée d'oxygène dont la concentration ne dépasse pas 5 % en volume, caractérisé en ce que dans un processus cyclique d'adsorption avec variation de la pression, de l'air soumis à une pression supérieure à la pression atmosphérique traverse, pendant chacune des phases d'adsorption, une couche d'un milieu adsorbant dans laquelle l'oxygène de l'air est adsorbé, en ce qu'à l'extrémité de la couche d'adsorption sort un mélange gazeux, riche en azote et contenant encore de l'oxygène, qui est envoyé dans les conteneurs de transport et en ce que pendant chacune des phases de désorption l'oxygène de l'air adsorbé est, par abaissement de la pression, enlevé par désorption du milieu adsorbant, de sorte que la phase d'adsorption suivante peut alors commencer, la quantité d'air qui doit traverser la couche de milieu adsorbant pour le maintien de la concentration d'oxygène voulue étant, dans une première phase de réalisation de l'atmosphère inerte, un multiple de la quantité d'air nécessaire dans une deuxième phase de réalisation de l'atmosphère inerte.

2. Procédé selon la revendication 1, caractérisé en ce qu'on réalise une atmosphère inerte dans un conteneur de transport contenant des produits facilement périssables au contact de l'air, par exemple des fleurs, des plantes ou des aliments.

3. Procédé selon la revendication 1 ou 2, caractérisé en ce que le gaz constituant l'atmosphère inerte est détendu à la pression atmosphérique avant son introduction dans le conteneur de transport.

4. Procédé selon l'une ou plusieurs des revendications 1 à 3, caractérisé en ce que le passage de la première phase à la deuxième phase de réalisation de l'atmosphère inerte s'effectue dès que la concentration d'oxygène dans le conteneur de transport atteint la concentration d'oxygène dans le mélange de gaz qui, lors de la première phase de réalisation de l'atmosphère inerte, s'écoule hors de la couche de milieu adsorbant.

5. Procédé selon l'une ou plusieurs des revendications 1 à 4, caractérisé en ce que, pendant les phases d'adsorption jusqu'au début de la deuxième phase de réalisation de l'atmosphère inerte, la couche de milieu adsorbant est traversée par une quantité d'air par unité de temps deux fois plus grande que pendant la deuxième phase de réalisation de l'atmosphère inerte et en ce que la durée des phases d'adsorption reste toujours la même.

6. Procédé selon l'une ou plusieurs des revendications 1 à 5, caractérisé en ce que, lorsque la concentration d'oxygène dans le conteneur de transport a atteint la valeur voulue, on effectue un rinçage supplémentaire du conteneur de transport au moyen du mélange gazeux riche en azote et ayant la concentration d'oxygène voulue que l'on a obtenue par le procédé d'adsorption avec variation de pression.

7. Procédé selon l'une ou plusieurs des revendications 1 à 6, caractérisé en ce que la concentration d'oxygène dans le conteneur de transport est mesurée et utilisée pour le réglage du débit de l'air dans la couche de milieu adsorbant pendant chaque phase d'adsorption.

8. Dispositif pour l'application du procédé selon l'une des revendications 1 à 7, caractérisé par un conteneur de transport dans lequel doit être réalisée une atmosphère inerte ayant une teneur en oxygène de 5 % en volume au maximum, par une installation (4) d'adsorption avec variations de pression fonctionnant d'une manière cyclique et comportant au moins un élément d'adsorption (5) rempli d'un milieu adsorbant l'oxygène, par une canalisation (6) qui relie le conteneur de transport à l'élément d'adsorption pour l'introduction d'un mélange gazeux riche en azote ayant une concentration d'oxygène déterminée et par un dispositif de commande (88) qui, pendant les phases d'adsorption, règle le débit d'air dans l'élément d'adsorption suivant la concentration d'oxygène que l'on veut obtenir au cours des phases successives de la réalisation de l'atmosphère inerte.

9. Dispositif selon la revendication 8, caractérisé par un conteneur de transport destiné à des produits facilement périssables au contact de l'air, comme des aliments, des plantes et des fleurs, et par un dispositif d'adsorption avec variations de pression (4) monté dans une partie en retrait (3) ménagée dans une paroi du conteneur et tournée vers l'intérieur et relié, d'une part, à l'atmosphère extérieure et, d'autre part, à l'atmosphère régnant à l'intérieur du conteneur et rempli par deux couches de milieu adsorbant, par un compresseur (9) pour l'air et par un dispositif de commande et d'analyse (88) pour les soupapes d'entrée et de sortie des récipients d'adsorption.

Fig.1

0 120 271

Fig.2